# EUROPEAN PATENT APPLICATION

(11) **EP 1 006 346 A1**
(43) Date of publication of application: **07.06.2000**
(21) Application number: 99309284.0
(22) Date of filing: 22.11.1999
(51) Int. Cl.: G01K 11/20

(54) **A method of temperature measurement**

(30) Priority: 01.12.1998 GB 9826281
(71) Applicant: ROLLS-ROYCE PLC, London, SW1E 6AT (GB)
(72) Inventor: Ranson, Robert Marcus, Thorneywood, Nottingham NG3 6LP (GB); Thomas, Clive, Burton Joyce, Nottingham NG14 5AJ (GB)

(57) **Abstract**

A method of phosphor thermographic temperature measurement comprising the steps of; illuminating (12) a thermographic phosphor coating (10) with a pulsed electromagnetic radiation to produce luminescence (16) of said phosphor coating (10); measuring and recording the intensity of said luminescence (16) over a period of time; and correlating the measured variation of the intensity of the said luminescence (16) over time to obtain a temperature measurement. The phosphor coating (10) being a relatively thin film phosphor coating. The thickness (t) of the thin film phosphor coating (10) being less than 10µm, preferably between approximately 0.3µm and 10µm. The thin film phosphor coating (10) being annealed before being used for temperature measurement.

## Description

The present invention relates generally to temperature measurement. In particular, but not exclusively it relates to non-contact temperature measurement using phosphor thermography.

Phosphor thermography temperature measurement is a known technique and relies on the temperature dependent photoluminescent characteristics of a phosphor coated onto a component to be measured. Predominantly, but not exclusively, these characteristics are the decay constant (lifetime) of the photoluminescence, as a result of excitation by a high energy radiative pulse, of the phosphor.

Using this technique a phosphor coating is applied to the surface of the component whose temperature is to be measured. A high-energy radiative excitation pulse (e.g. a UV pulsed laser) is directed at the phosphor coated surface. This causes excitation of the phosphor and subsequent temperature dependent photoluminescent emission from the phosphor. The photoluminescent emission is captured, analysed and compared against precalibrated data of the photoluminescence at different known temperatures to provide an accurate temperature measurement of the component.

Phosphor Thermography is an optical technique and therefore no physical contact is required between the measurement apparatus and the component (except for applying a coating to the component). The technique can therefore be used to measure the temperature of rotating components and for components operating in hostile environments where physically connecting temperature measurement devices (for example thermocouples) may not be practical or causes problems.

Consequently the technique is particularly suited to measuring the temperature of gas turbine engine components where it is often necessary to measure the temperature of rotating components. A further advantage of phosphor thermography, that makes it applicable for measuring the temperature of gas turbine engine components, is that by suitable selection of different phosphors it can accurately measure high temperatures. Temperatures in the range of 600°C to 1200°C typically being required to be measured for gas turbine components.

The operating environment within gas turbine engines is often hostile, at an elevated temperature, and many components are subject to large centrifugal forces. If phosphor thermography is to be used to measure the temperature of components operating within, and subject to this environment, then the phosphor coating applied to components must be able withstand this environment. With conventional techniques this has been a problem with the phosphor coatings flaking off the components and the photoluminescence of the phosphor being degraded in a relatively short period. Additionally many of the components of a gas turbine engine have aerodynamic characteristics. The phosphor coatings that are applied to such components to take phosphor thermographic temperature measurements can have an affect on the component aerodynamics. This can alter the performance of the components and the engine. The temperature measurements taken may therefore be inaccurate, and unrepresentative of the normal operation of the components and/or engine.

A further consideration with phosphor thermographic temperature measurement, particularly for high temperature measurement whether for gas turbine engine components or other components, is the intensity of the photoluminescence, or fluorescence, emitted by the phosphor coating in response to the high energy radiative pulse. At high temperatures the component, or ambient environment, emits an increasing amount of blackbody radiation as the temperature increases. This represents an increasing background noise level from which the photoluminescence signal from the phosphor must be distinguished in order to make the temperature measurement. If the intensity of the emitted photoluminescence is low compared to the background noise level / blackbody radiation then it becomes difficult to distinguish the signal from the noise. This leads to inaccuracy in the temperature measurement and/or may limit the range of temperature over which temperature measurements can be made. Additionally with conventional phosphor thermographic techniques the intensity of the emitted photoluminescence is generally dramatically degraded relatively quickly when the phosphor coating is exposed to high temperatures. This limits the time over which temperature measurements can usefully be made before the phosphor coating has to be replaced.

It is therefore desirable to provide an improved method of phosphor thermography temperature measurement which addresses these problems and/or offers improvements generally.

According to the present invention there is provided a method of phosphor thermography temperature measurement comprising the steps of;
illuminating a thermographic phosphor coating with a pulsed electromagnetic radiation to produce luminescence of said phosphor coating;
measuring and recording the intensity of said luminescence over a period of time;
correlating the measured variation of the intensity of the said luminescence over time to obtain a temperature measurement;
characterised in that the phosphor coating is a is relatively thin film phosphor coating.

Such thin phosphor coatings having a reduced effect upon the aerodynamics of a component to which they may be applied and have a minimal thermal gradient through the coating thereby reducing temperature measurement error.

Preferably the thickness of the thin film phosphor coating is less than 10µm. The thickness of the coating may be between approximately 0.3µm and 10µm. Furthermore the thickness of the thin film phosphor coating is of the order of 0.7µm.

Preferably the thin film phosphor coating is annealed before being used for temperature measurement.

Annealing of the thin film phosphor coating provides improved photoluminescent emission intensity as compared to unannealed coatings. Such increased intensity making it easier to distinguish the photoluminescent temperature dependent signal from a background blackbody radiation and improving the measurement ability of the method.

Preferably the thin film phosphor coating is annealed at a, previously determined, temperature and period sufficient to produce no further improvement in intensity of the resultant luminescence of the phosphor when illuminated with pulsed electromagnetic radiation.

The thin film phosphor coating comprises a coating of a Yttrium oxide based phosphor doped with a rare earth ion. Furthermore the thin film phosphor coating comprises a coating of a Yttrium oxide : Europium activated.

Preferably the thin film phosphor coating is annealed at a temperature of greater than approximately 1100°C for a period of at least approximately 30 minutes. Alternatively the thin film phosphor coating is annealed at a temperature of approximately 1200°C for a period of at least 15 minutes.

The thin film phosphor coating is produced by sputtering. Furthermore the thin film phosphor coating may be produced by radio frequency magnetron sputtering. Alternatively the thin film phosphor coating is produced by evaporation. The thin film phosphor coating may be produced by chemical vapour deposition or by atomic layer epitaxy.

The present invention will now be described by way of example only with reference to the following figures in which:
Figure 1 is a diagrammatic representation depicting the system of phosphor thermographic temperature measurement;
Figure 2a, 2b and 2c are plots, for thin film phosphor coatings annealed at different respective temperatures, of the resultant intensity of the photoluminescence against the annealing period for a number of different thickness' of thin film phosphor coating;
Figure 3 is a plot of the resultant intensity of the photoluminescence against exposure time for different thickness' of thin film phosphor coating.
Figure 4 is an illustrative plot of the decay rate constant of the intensity if the photoluminescence against temperature.

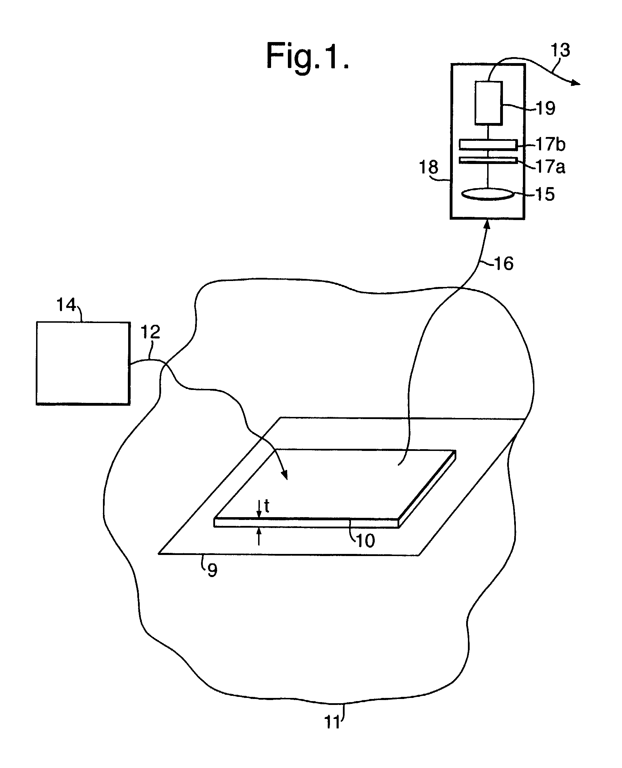

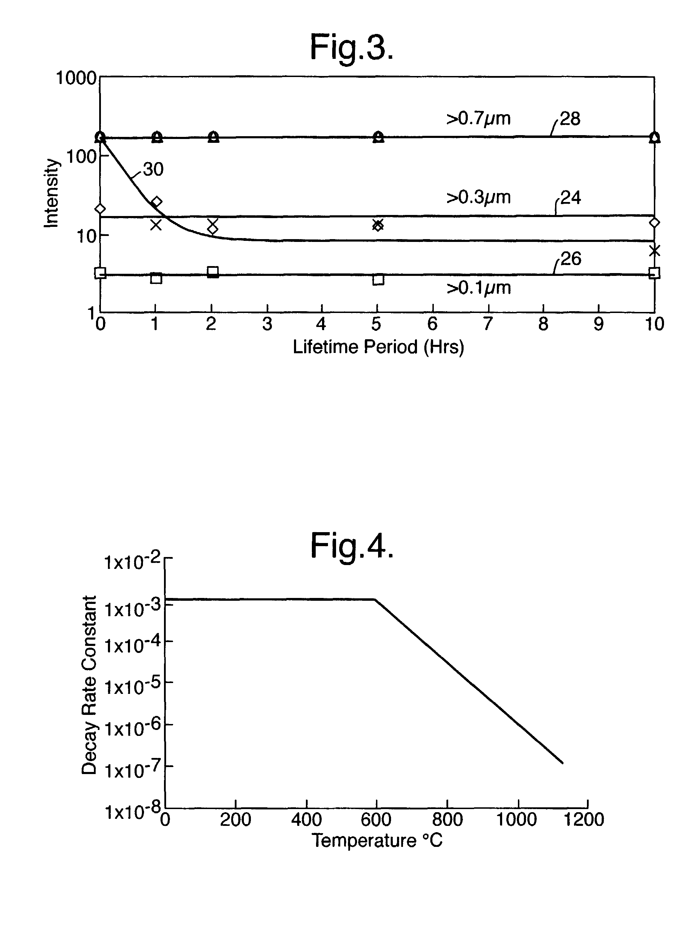

In figure 1 an arrangement for phosphor thermographic temperature measurement of a component 9 is shown in diagrammatic form. A thin film phosphor coating 10 is applied to a component 9 whose temperature is to be measured. The thin film phosphor coating 10 comprises a thermographic phosphor which has a high rate of change of photoluminescent emission characteristics over the temperature measurement range of interest. For temperature measurement of gas turbine engine components the temperature range of interest is typically 600°C to 1200°C. A suitable phosphor for this temperature range is Europium doped Yttrium Oxide (Y₂O₃:Eu). This phosphor has a single major photoluminescent emission line at a wavelength of 611 nm. The decay characteristics of the intensity of this photoluminescent emission in response to excitation by a UV radiative pulse, varies over this range as shown in figure 4. Figure 4 indicating illustratively the change in decay rate constant for Europium doped Yttrium Oxide. It is known however that this range where the photoluminescence emission characteristics vary (e.g. intensity decay characteristics) can be altered by adjusting the dopant levels within the phosphor.

The phosphor is excited by a high energy electromagnetic radiative pulse of UV radiation provided by a UV laser within an optical system 14. In this particular embodiment a Neodymium YAG Pulse laser (Nd:YAG) with a wavelength of 355nm or 266nm is used. It will be appreciated though that other lasers and different excitation wavelengths can, and are known for use, in this technique but that these will produce different absolute values of the intensity of the photoluminescence due to the photoluminescence characteristics of the particular phosphor. Different lasers, and wavelengths, may also have different practical advantages/disadvantages for any particular application and phosphor. The radiative pulse is of a short duration, typically 14ns. The UV laser is coupled to a fibre optic cable to direct the laser light 12 (high energy UV radiative pulse) at the thin film phosphor coating 10 on the component 9. The coupling from the laser to the fibre optic is achieved by standard UV optics known in the art. A mounted probe is provided at the component 9 end of the fibre optic to direct and focus the UV laser light exiting the fibre at the thin film phosphor coating 10 on the component 9. The excitation of the thin film phosphor coating 10 by UV light pulse results in photoluminescence of the thin film phosphor coating 10 and the emission 16 of fluorescence/phosphorescence from the thin film phosphor coating 10 at particular wavelengths. For Europium doped Yttrium Oxide this emission is at 611nm.

The photoluminescent emission 16 is collected and directed via a collector probe and fibre optic cable into a detector system 18. In this embodiment the detector system 18 and optical system 14 are shown as separate, mainly in the interests of clarity. However in other embodiments and arrangements the optical 14 and detection 18 systems may be combined. The detector system 18 comprises a lens 15 to collect the emission 16 from the fibre optic and focus the emission onto a collection window of a photomultiplier tube (PMT) 19, for example a Type 9954B PMT supplied by Electron Tubes Ltd. Two filters 17a, 17b specific to the emitted wavelength are interposed between the lens 15 and the PMT 19. These filters 17a, 17b separate out, and pass, the particular wavelength (611nm for Europium doped Yttrium Oxide phosphor used in this embodiment) of the emitted photoluminescence 16. The first filter is a UV high pass filter which is cut on 520nm, blocking light below this wavelength in particular the UV excitation laser light at 355nm and/or 266nm. The second filter is a narrow band filter centred on a wavelength of 610nm and with a band width of 10nm. The bandwidth allowing for any slight shifts in the emission wavelength at 611nm. This reduces the UV laser energy and blackbody radiation coupling that is detected. The output signal 13 from the PMT 19 is representative of the intensity of the emission 16 detected. This signal 13 is read by a data capture system (not shown) which automatically records the signal over time and is also arranged to be triggered by the laser pulse 12.

The characteristics of the recorded output signal 13, representative of the intensity of the emission 16 detected, for each pulse are then analysed within typically a computer system to determine the temperature of the thin film phosphor coating 10 and so of the component 9. The typical characteristic which varies with temperature and which is analysed is the decay rate constant of the measured intensity following each laser pulse. This is then compared against known precalibrated results, taken at different known temperatures, for the particular phosphor to give an indication of the temperature of the thin film phosphor coating 10. Alternatively the temperature can be calculated directly from the analysed characteristics recorded using known theoretical or experimentally derived equations relating the temperature dependent characteristics directly to the temperature. Although the decay rate constant is the typical temperature dependent characteristic used other temperature dependent characteristics of the photoluminescence are known and can be used. For example the rise time of the photoluminescence can be used as described in our copending UK patent application number 9723018.9.

As described above the phosphor thermographic temperature measurement is generally similar to known techniques. It will be assumed therefore that the skilled man in the art is familiar with such techniques and any variations to them which do not affect the present invention.

The thin film phosphor coating 10 on the component 9 is applied to the component 9 has a thickness t of the order of less than 10pm. This coating 10 is therefore relatively thin as compared to conventional thick coatings which have a thickness of greater than 10pm and are typically of the order of 20 to 25µm thick. The thin phosphor coating 10, or film, is applied to the component 9 using RF (radio frequency) magnetron sputtering. This is a known technique for applying and depositing thin films or coatings of material in which a target of the required phosphor material (Europium doped Yttrium Oxide) to be applied is sputtered onto the component 9 in a carrier gas under the influence of an electric field. Other known methods of applying or depositing thin films or coatings include evaporation methods (electron beam vapour deposition, Laser vapour deposition), chemical vapour deposition, and atomic layer epitaxy. These methods can equally be used to apply a thin film phosphor coating 10 to a component 9.

Such thin film phosphor coatings 10 have a number of advantages over the conventional thick films generally used. Firstly such thin films have improved survivability, compared to thicker films, in the harsh operating environment typical for gas turbine operation with the coating 10 remaining on the component 9 for a longer period. This is because, due to their reduced thickness t, thin films are subject to reduced stress throughout their thickness t. This reduces cracking of the film/coating 10 which reduces the tendency of the coating 10 to fall off. Furthermore it is believed that thin films exhibit improved adhesion to the component 9. Secondly thin films, in particular when deposited by sputtering, have a more even thickness t across over the coated area and have a smoother surface. This, in conjunction with the thinness of the film itself, reduces the detrimental aerodynamic effects that the coating 10 may have on components 9 to which the coatings 10 are applied. When such coatings 10 are used on gas turbine components 9 this means that the phosphor thermography temperature measurement technique has less effect on the engine operation and better temperature readings which are more representative of normal operation without the thin film phosphor coating 10 are produced. A further advantage is that the thermal gradient within the coating 10 between the top surface and the component 9 upon which the coating 10 is applied is reduced by using thinner coating 10 films. The temperature actually measured is that of the top surface of the coating 10. The temperature of the component 9 surface being derived from that measured at the surface being derived for the top surface measurement taking into account the thermal gradient. By reducing the gradient the temperature measurement error associated with taking the thermal gradient into account is minimised.

Despite these advantages thin films, of the order of less than 10µm, have not been previously proposed for use in phosphor thermography in practical application, for example for temperature measurement of gas turbine components 9. One possible reason is because it has been found that the intensity of the photoluminescence is lower than that achieved with thicker films (greater than 10µm). Although the temperature dependent characteristics utilised in phosphor thermography are independent of the intensity of the photoluminescence the intensity of the photoluminescence is practically important in enabling the photoluminescence to be distinguished from a background noise level of blackbody radiation also emitted by the component 9 and part of which is at the same wavelength as the signal to be measured. This being particularly so for high temperature applications where the blackbody radiation is greater. Furthermore the photoluminescence signal also needs to be of a suitable level and intensity for it to be detected by the detector 18 and measured with some degree of accuracy. The lower the intensity the more difficult this becomes. It is therefore desirable to maximise the possible intensity of the emitted photoluminescence of the coating 10.

It has been found however, and it is proposed, that by thermally annealing the thin phosphor films (less than 10 µm thick) after deposition on the component 9 that the intensity of the photoluminescence of the thin films can be enhanced and/or maintained. Therefore in practical phosphor thermographic applications, in particular for measuring the temperature of gas turbine engine components 9 or in other similarly harsh operating environments, suitably annealed thin films have further advantages over and above just utilising thin phosphor films/coatings 10. It is believed that after deposition of a phosphor coating 10, for example Europium doped Yttrium Oxide, the dopant atoms/ions are situated in a variety of positions and rotations within the crystal lattice structure of the host. The dopant ions, for example Europium atoms, therefore experience a variety of crystal field effects, which lead to weaker and wider spectral emission lines, reducing the intensity. Thermal annealing enables the dopant atoms/ions (Europium in this case) to reposition correctly within the host lattice restoring the crystalline quality. This results in improving the coupling of the excitation energy to the electrons, and hence enhancing the intensity of the spectral emission lines and so of the intensity of the emitted photoluminescence.

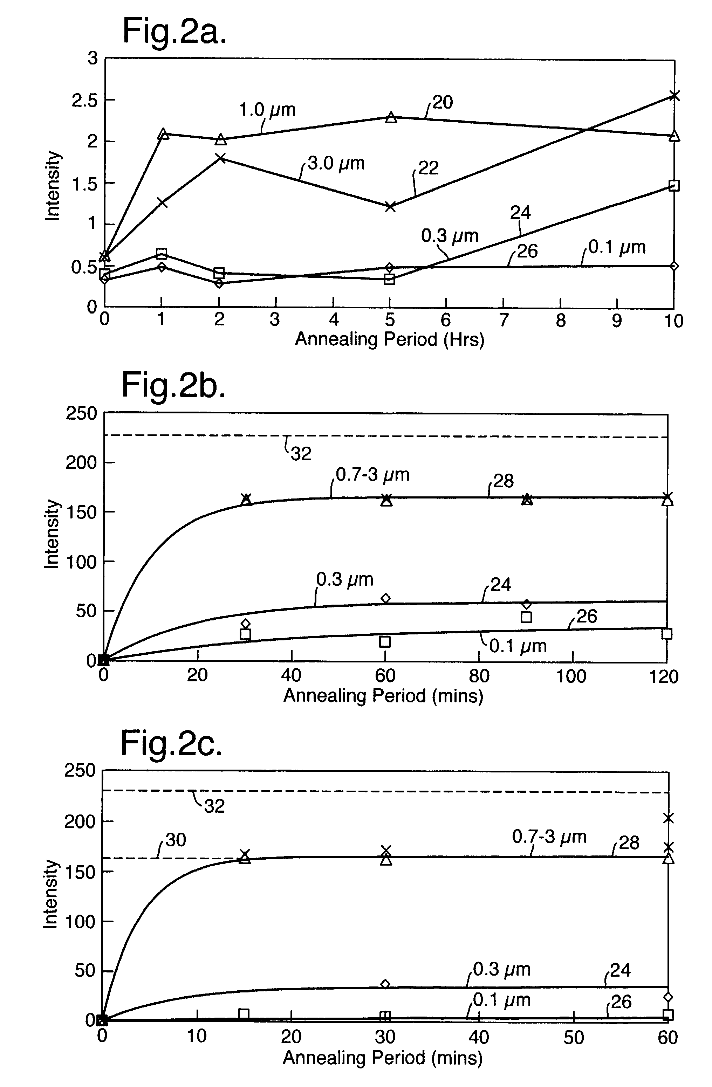

Experiments have been conducted using various thin film phosphor coatings 10 of Europium doped Yttrium Oxide (Y₂O₃:Eu) which have been thermally annealed at different temperatures for different periods. In these experiments thin phosphor coatings 10 of 0.1, 0.3, 0.7, 1.0 and 3.0 µm thickness t were deposited and then thermally annealed. These samples were then tested after different annealing periods and the intensity of the photoluminescence measured using the standard phosphor thermography apparatus described previously. The results of these experiments and the peak value of the intensity of the photoluminescence achieved for different annealing temperatures (900°C, 1100°C, and 1200°C respectively) and times are shown in figures 2a to 2c. In these results, as is customary in the art, the intensity values measured are plotted using arbitrary, but consistent, units of intensity.

The results shown in figure 2a are based upon thermally annealing the deposited thin film coatings 10 at 900°C for varying periods. As shown, in particular by lines 22 and 24 for films 0.3 and 3.0µm thick, the intensity shows a slight improvement with after ten hours at the annealing temperature. However the intensity is still two orders of magnitude lower than Europium doped Yttrium Oxide (Y₂O₃:Eu) as a powder (shown by line 32 in figures 2b and 2c) and is significantly lower than that obtained for conventional thick films (shown by line 30 in figure 2c). Such low intensity giving rise to problems in practically using such thin phosphor films.

Referring to figure 2b a significant increase in the intensity of the thin phosphor coatings/films 10 is produced when annealing the thin phosphor coatings 10 at 1100°C. In particular for the 0.7, 1.0 and 3.0 µm thick films/coatings 10 which produced similar results shown by line 28, the intensity is similar to that of thick films. The results for the even thinner coatings 10 with thickness' t of 0.1 and 0.3 µm (lines 26 and 24) showing lower intensities but still significantly higher than with no annealing or annealing at 900°C. The intensity increasing with annealing period to a maximum after approximately 30 minutes at 1100°C for all of the different thickness' t tested.

As shown in figure 2c annealing at 1200°C increases the intensity of the photoluminescence in a similar way to annealing at 1100°C. The time required however to achieve a maximum intensity reduces at 1200°C to approximately 15 minutes as compared to 30 minutes at 1100°C.

The results therefore indicate that the intensity of the photoluminescence can be improved by annealing at higher temperatures, greater than 900°C and that the time required to achieve maximum intensity reduces with higher annealing temperature. The level of the resultant increase in photoluminescence from such annealed thin film phosphor coatings is unexpected and gives rise to a number of advantages allowing their practical and improved use in phosphor thermography. These results, figures 2a to 2c, also suggest that the optimum thickness t (i.e. thinnest coating 10 with maximum intensity) of the thin coatings 10 is of the order of 0.7pm for coatings 10 that are subsequently annealed at an elevated temperature. The results for a 0.7µm coating 10 annealed at 1200°C providing an intensity increase of 7x10³ compared with as deposited samples of Europium doped Yttrium Oxide (Y₂O₃:Eu).

The results, shown in figure 2a, 2b and 2c, also suggest that beyond a minimum thickness t the intensity of annealed coatings 10 does not vary with the thickness t of the coatings 10. Consequently thin annealed phosphor coatings 10 can practically be used provided that they are above a minimum thickness t. For Europium doped Yttrium Oxide this minimum thickness t would appear to be in the region of 0.3µm. Therefore for practical use of thin film phosphor coatings 10 the optimum (i.e. thinnest practical) coatings 10 are in the region of 0.3 to 0.7µm thickness. Coatings below 0.3µm having an intensity of photoluminescence that is too low, and those above 0.7µm thickness showing no improvement in photoluminescence.

Figure 3 shows the results of lifetime measurements on thin film coatings 10 (lines 26,24,28) of various thickness' t (0.1, 0.3, 0.7, and greater than 0.7µm) annealed at 1200°C for 1 hr, and for a conventional thick film phosphor coating, with a thickness t greater than 10µm (line 30). The same Europium doped Yttrium Oxide phosphor of the same composition being used throughout the experiments. The lifetime measurements simulate operation of the phosphor under harsh elevated temperature conditions (typical of a gas turbine engine environment) involved exposing coated samples to temperatures of 1200°C for varying periods and checking the condition of the samples and measuring the photoluminescence. All of the thin films survived for up to 10 hrs with little loss over time of their intensity emission, as shown by lines 24,26,28. For the thick film however the coating flaked after a short period of exposure and where material did remain the intensity showed a dramatic and rapid decrease, as shown by line 30. This shows that such thin film coatings 10 have improved survivability and maintain the intensity of the photoluminescence after prolonged exposure to elevated temperatures as compared to thick coatings. This is a further advantage of such annealed thin phosphor coatings 10.

The overall results of all of these experiments therefore indicate that thin films of the order of less than 10µm can be used for practical phosphor thermography measurements at elevated temperatures, and in particular for gas turbine engine components. Such coatings 10, especially when thermally annealed, exhibiting a number of advantages, some of which are unexpected, over conventional phosphor coatings 10.

Although the invention has been described with reference to Europium doped Yttrium Oxide it will be appreciated that the principle could be applied to all phosphors. For example other suitable phosphors used for high temperature thermographic temperature measurement include Dysprosium or Terbium doped Yttrium Aluminium Garnet, and Europium doped Lutetium Phosphate. It will be appreciated though that for such different phosphors different optimum annealing times, temperatures and optimum thin film coating thickness' may be required. If required these can be initially optimised for the different phosphors and then applied to phosphor thermographic temperature measurement of components.

## Claims

1. A method of phosphor thermographic temperature measurement comprising the steps of;
illuminating (12) a thermographic phosphor coating (10) with a pulsed electromagnetic radiation to produce luminescence (16) of said phosphor coating (10);
measuring and recording the intensity of said luminescence (16) over a period of time;
correlating the measured variation of the intensity of the said luminescence (16) over time to obtain a temperature measurement;
characterised in that the phosphor coating (10) is a is relatively thin film phosphor coating.

2. A method as claimed in claim 1 in which the thickness (t) of the thin film phosphor coating (10) is less than 10µm.

3. A method as claimed in claim 1 or 2 in which the thickness (t) of the coating (10) is between approximately 0.3µm and 10µm.

4. A method as claimed in any preceding claim in which the thickness (t) of the thin film phosphor coating (10) is of the order of 0.7µm.

5. A method as claimed in any preceding claim in which the thin film phosphor coating (10) is annealed before being used for temperature measurement.

6. A method as claimed in claim 5 in which the thin film phosphor coating (10) is annealed at a, previously determined, temperature and period sufficient to produce no further improvement in intensity of the resultant luminescence (16) of the phosphor (10) when illuminated (12) with pulsed electromagnetic radiation.

7. A method as claimed in any preceding claim in which the thin film phosphor coating (10) comprises a coating of a Yttrium oxide based phosphor doped with a rare earth ion.

8. A method as claimed in any preceding claim in which the thin film phosphor coating (10) comprises a coating of a Yttrium oxide : Europium activated.

9. A method as claimed in any one of claims 5 to 8 in which the thin film phosphor coating (10) is annealed at a temperature of greater than approximately 1100°C for a period of at least approximately 30 minutes.

10. A method as claimed in any one of claims 5 to 8 in which the thin film phosphor coating (10) is annealed at a temperature of approximately 1200°C for a period of at least 15 minutes.

11. A method as claimed in any preceding claim in which the thin film phosphor coating (10) is produced by sputtering.

12. A method as claimed in claim 1 in which the thin film phosphor coating (10) is produced by radio frequency magnetron sputtering.

13. A method as claimed in any preceding claim in which the thin film phosphor coating (10) is produced by evaporation.

14. A method as claimed in any preceding claim in which the thin film phosphor coating (10) is produced by chemical vapour deposition.

15. A method as claimed in any preceding claim in which the thin film phosphor coating (10) is produced by atomic layer epitaxy.

16. A phosphor coated component (9) adapted for use in the method of any of the preceding claims.
